# EUROPEAN PATENT APPLICATION

(11) **EP 4 484 271 A1**
(43) Date of publication of application: **01.01.2025**
(21) Application number: 23382678.3
(22) Date of filing: 30.06.2023
(51) Int. Cl.: B63B 39/03, B63B 1/10

(54) **A FLOATING OFFSHORE STRUCTURE INCORPORATING A WATER MOTION STABILISATION SYSTEM**

(71) Applicant: Universidad del País Vasco/Euskal Herriko Unibertsitatea, 48940 Leioa, Vizcaya (ES)
(72) Inventor: GARRIDO HERNÁNDEZ, Aitor Josu, 48940 Leioa - Bizkaia (ES); GARRIDO HERNÁNDEZ, Izaskun, 48940 Leioa - Bizkaia (ES); CAYUELA PADILLA, Salvador, 20750 Zumaia - Gipuzkoa (ES)
(74) Representative: Balder IP Law, S.L.

(57) **Abstract**

The invention refers to a floating offshore structure incorporating a water motion stabilization system. The structure comprises: a platform, at least one floater joined to the platform, each floater having at least an internal chamber and having a closed upper end and an open bottom end, and wherein the floaters are positioned such that the open bottom end is submerged when the offshore structure is deployed on the sea, so that a water column can oscillate inside the chamber of each floater. Each floater has a valve arranged such that in its open position it communicates an upper part of the chamber of the respective floater with the ambient air, and in its closed position it serves for controlling the volume of air enclosed within the chamber of each floater. The invention improves water motion dampening effect, so as to improve stabilization particularly of Floating Offshore Wind Turbine Platforms, thereby, improving the efficiency of wind turbines and enlarging their operation range.

## Description

### TECHNICAL FIELD

The present invention relates in general to ship technology using Oscillating Water Columns, as means of dampening ship or floating bodies motions when they are subjected to water motion.

An object of the invention is to improve water motion dampening, so as to improve stabilization particularly of floating offshore wind turbine platforms, thereby, improving the efficiency of wind turbines and enlarging their operation range.

### STATE OF THE ART

It is well known to extract energy from the wind by causing the wind to drive a wind turbine which is, typically, mounted as high as possible so as to ensure that it is exposed to the full force of the wind. Whilst such turbines are relatively efficient and are able to extract large amounts of energy from the wind, the higher efficiency turbines tend to have very large diameter blades and hence require very high platforms or towers upon which they can be safely mounted.

On land this does not present a problem as the tower can be firmly secured to ground but the security of fixture is somewhat more problematic when mounted to a floating platform which is subjected to the motion of the waves. Any such motion causes the turbine to oscillate from a steady state condition and creates what can be adverse structural loadings on both the turbine and the support tower itself.

Such floating platforms also suffer from adverse motion in up to six axes (roll, yaw, pitch, heave, sway and surge) whilst floating on what can be very rough seas.

Motion in any one or more axis will have an adverse effect on platform stability, structural loading and also power generation and is preferably reduced to a minimum in order to prolong platform life and energy extraction.

For instance, the efficiency of the Floating Offshore Wind Turbines is reduced owing to the movement of the platform caused by incoming waves, being pitch the main degree of freedom to be controlled, together with yaw motion. Other Floating Offshore Structures or ships need station keeping capabilities and / or motion reduction to carry out the purpose they are fit for.

Various systems have been proposed to stabilise the platform itself, some of which are based on Oscillating Water Columns. However, there is still a need to improve stabilisation systems that reduce the motion of floating offshore structures.

### DESCRIPTION OF THE INVENTION

The invention is defined in the attached independent claims, and it is based on the provision of independent Oscillating Water Columns chambers inside floaters of an offshore floating platform, preferably an Offshore Wind Turbine Platform.

The invention relies in Oscillating Water Columns to reduce the motions of the floating platforms. The Oscillating Water Columns produce a moment that counteracts the motion moment of the offshore floating platform. In the case of floating offshore wind turbines, the platform pitch and yaw motions are reduced, thus, the efficiency of the wind turbine is increased. In the case of floating offshore structures or ships where position keeping is necessary, their operation window is extended.

More in detail, an aspect of the invention refers to a floating offshore structure incorporating a water motion stabilization system, wherein the structure comprises: a platform and at least one floater joined or built in in the platform. The platform with the integrated floater may be embodied as a one large float, for example a parallelepiped or cylindrical barge, or even a conventional ship hull or two hulls arranged as a catamaran.

The floater is a hollow body defining an internal chamber, and having a closed upper end and an open bottom end. The floater is positioned such that the open bottom end is submerged when the offshore structure is deployed on the sea, so that a water column can oscillate inside the chamber of each floater, in accordance with the wavy motion of the sea water surface.

The floating structure further comprises a valve for each floater Oscillating Water Column chamber, wherein each valve is arranged such that in its open position it communicates the upper part of the chamber of the respective floater with the ambient air or any other chamber, and in its closed position it serves for controlling the volume of air enclosed within the chamber of each floater, thus, also controlling the height of the water column inside each chamber.

Additionally, the floating structure comprises at least one sensor or a set of sensors to provide information about the platform motion, and a control system for opening and closing each valve based on the information provided by the set of sensors, to stabilise the structure.

The set of sensors to provide feedback to the control loop, may consist of at least one of the following sensors or any combination of the following: a sensor of the platform motions period (i.e. accelerometer), a sensor of the wave period (i.e. echosounder plus pressure sensor, at the bottom of a floater), a sensor of the wave height (at least one pressure sensor at the bottom of every floater), an inclinometer (at least one for every plane), or a wind sensor.

The control system may be formed by a variety of feedback controllers, ranging from Proportional-Integral-Derivative (PID) to sliding controls and Artificial Intelligent controllers, to operate the water motion stabilisation system. These controllers receive feedback from the sensors to the control loop, which then determines the appropriate action to take to stabilise the structure. The controllers work by acting on a butterfly valve or a similar device that regulates pressure drop. This valve may be electromechanically driven with a gravity safe state. The type of controller selected and the mode of activation depends on several factors, including the size and type of platform and the environmental conditions in which it operates.

The controllers or some of them, may be implemented as a conventional PID controller, that operate by continuously measuring the error between the desired and actual positions of the vessel and adjusting the control input accordingly. This type of controller is easy to implement and has a proven track record of success.

Some controllers may consist of a Sliding Control which is another type of feedback controller that is based on a technique called sliding mode control, which is designed to handle systems with uncertainties and disturbances. This type of controller provides a robust and reliable method for controlling the water motion of a vessel, even in the presence of external disturbances and changing environmental conditions.

Furthermore, some controllers may consist of Artificial-Intelligent based controllers, that use machine learning algorithms to learn from the data collected by sensors in real-time. This enables them to adapt to changing conditions and make smarter decisions about how to control the movement of the vessel.

Therefore, the height of the Oscillating Water Column, and thus, the opposing moment to the motion moment of the platform that is to be reduced, is adjusted by the air enclosed in each chamber, which volume is controlled by the valve in the upper part of the chamber.

All the floaters operate independently from each other. Alternatively, at least two chambers of different floaters are fluidly communicated for air, vacuum or water transfer between them.

The invention provides a stabilisation control of floating offshore structures, using Oscillating Water Columns chambers that produce a motion reduction in the six degree of freedom of the translation and rotational motion of the floating platform. The Oscillating Water Columns are used for reducing the translational (heave, sway, surge) and rotational (pitch, yaw, roll) motions of the floating platform, so that the Oscillating Water Column is used as a stabilization system.

Preferably, each floater has a cylindrical tubular configuration, and the platform has generally a flat configuration and the floaters are placed below the platform.

In a preferred embodiment, the platform has a central area and a plurality of arms radially extending from the central area, and the floaters are located at the free end of each arm. Preferably, the platform has six equidistantly arranged arms and six floaters.

The Oscillating Water Columns chambers built-in the floaters of the floating offshore structure, may be fitted with at least one electric turbine coupled to a valve for generating electric energy from air flow through the valve. This valve can be the same valve that controls the airflow in the chamber.

Optionally, the floating offshore structure is equipped with a source of pressurized air and/or a vacuum source fluidly communicated with the chamber of each floater, and adapted for controlling the volume of air within each chamber.

Another aspect of the invention refers to an offshore wind turbine plant comprising the floating structure previously defined, and a wind turbine having a tower attached at one end to the platform, and wherein the longitudinal axis of the floaters are parallel to the longitudinal axis of the tower.

Another aspect of the invention refers to a vessel or ship comprising the oscillating water colums chambers previoulsy defined.

The Oscillating Water Columns system is to be design and calculated for every floating offshore platform, floating offshore structure or ships so that the actual motion period of the platform together with the selected Oscillating Water Column chamber or chambers in operation produce a motion dampening of the whole set, for a certain period of the incident waves. In order to assess the most suitable configuration and number of Oscillating Water Columns in operation it is necessary to study the response in frequency of the platform itself and compare its response with the different Oscillating Water Columns devices in operation.

In a preferred embodiment, the invention provides dampening in pitch and yaw, the most critical degrees of freedom for wind turbine efficiency, of around 75% in certain frequency intervals. Roll can be reduced around 66% as an average or even to 75% for a certain combination of chambers in operation. Sway resonance peak can be avoided with certain Oscillating Water Columns combinations, and heave can be reduced around 50% in the same way. Surge is dampened around 50% as an average. An additional characteristic of the invention is that in addition to the motion reduction, the response of the platform with the use of Oscillating Water Column devices, is smooth and steady.

The invention provides a simple and reliable solution, fit to marine environment, to control the stabilization of a floating platform reducing the problem of wave-induced motions in the six degrees of freedom up to 75% in some cases, by means of shifting the natural frequency of the platform set with the help of Oscillating Water Column devices out of the frequency period of incident waves. Another advantage of motion dampening is the reduction of structural fatigue and related maintenance costs.

In the case of floating offshore wind turbines platforms, another characteristic of the use of Oscillating Water Columns is the possibility of connecting the air control valve of the chamber to a wave energy converter, including a turbine with a unidirectional rotation such as a Wells turbine, so that the whole set is able to harvest both wind and wave energy, turning the floating offshore wind turbine platform into a hybrid wind-wave platform, improving the efficiency of the whole set and accelerating the return of investment.

An additional application of Oscillating Water Column devices to control the stabilization, is in those ships or floating platforms that need to be stationary or in operation at low speeds, extending their operational window, or just to reduce their translational or rotational motions in their operation.

The arrangement and number of Oscillating Water Columns devices must be calculated and optimized in every case, taking into account the sea state and area in which the vessel is going to operate. Fuel consumption is to be reduced as well, being renewable power the main source for loading a battery storage system, whenever it is installed in a vessel. Also for vessels equipped with dynamic position, the power required for keeping positon would be less and the transient reponse after position keeping failure would be improved.

The control system is adapted to ensure stability of the floating structure and regulating the draft as necessary, while maximizing the energy extracted from the waves whenever possible. By balancing these competing objectives, Oscillating Water Column wave energy converters stand to greatly enhance the sustainability of our installation energy generation practices.

Some advantages of the invention are listed below:
- Oscillating Water Columns are used with wave energy converters to harvest wave energy;
- the installation of an Oscillating Water Column in multi-floater platforms produce a floater design with minimum volume in the water plane area thus making the whole floating platform plus wind turbine less sensitive to waves action, which eventually has a positive effect on wind turbine efficiency and operation range;
- Oscillating Water Columns produce a dampening in pitch and yaw motions, which are the ones that have a greater effect in wind turbine efficiency. Tuned mass dampers dampen roll and sway motions, which have less effect in the wind turbine efficiency;
- the most common offshore floating platform consists of a set of cylindrical floaters attached, most of them from three floaters on. Oscillation water column system is easy to build in this layout, which is the most efficient to get a small water plane area;
- Oscillating Water Columns is a simple, cost effective and reliable installation with no movable parts in the submerged body or in waves action area to operate in marine harsh environment, with minimum maintenance;
- the invention is capable of controlling the six degrees of freedom of the floating platforms, in contrast to previous solutions (anti-roll tanks) that have been implemented in ships and that are fit for dampening the roll motion only.

### BRIEF DESCRIPTION OF THE DRAWINGS

To complete the description and in order to provide a better understanding of the invention, a set of drawings is provided. These drawings form an integral part of the description and illustrate embodiments of the invention, which should not be interpreted as restricting the scope of the invention, but just as examples of how the invention can be carried out. The drawings comprise the following figures:
Figure 1.- shows a schematic representation in a side view of a floating offshore structure according to the invention, in this case, embodied as a Floating Offshore Wind Turbine Six-Floater platform. Figure 1 is a cross-sectional view taken at plane B-B in Figure 3.
Figure 2.- shows an enlarged representation of the bottom part of Figure 1.
Figure 3.- shows a schematic representation of a top plan view of the floating offshore structure of Figure 2. Figure 3 is a cross-sectional view taken at plane A-A in Figure 2.

### PREFERRED EMBODIMENTS OF THE INVENTION

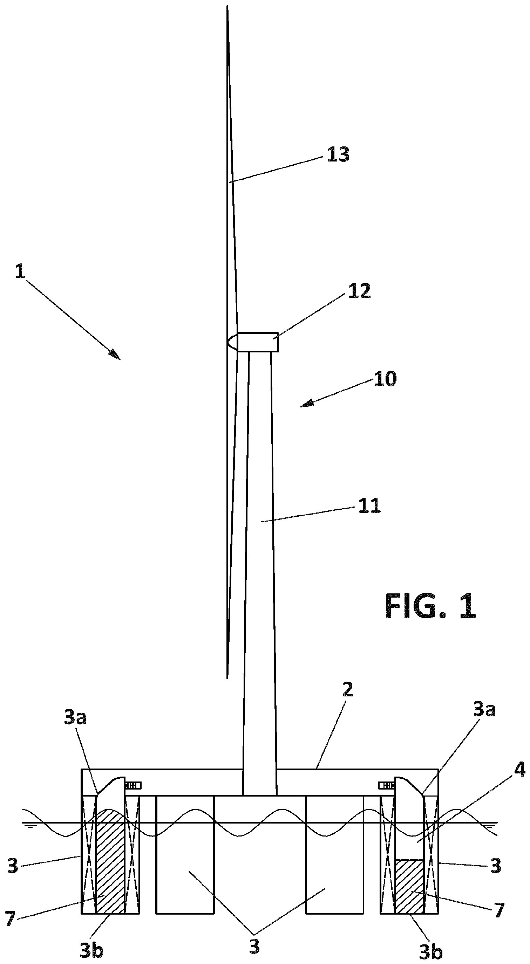

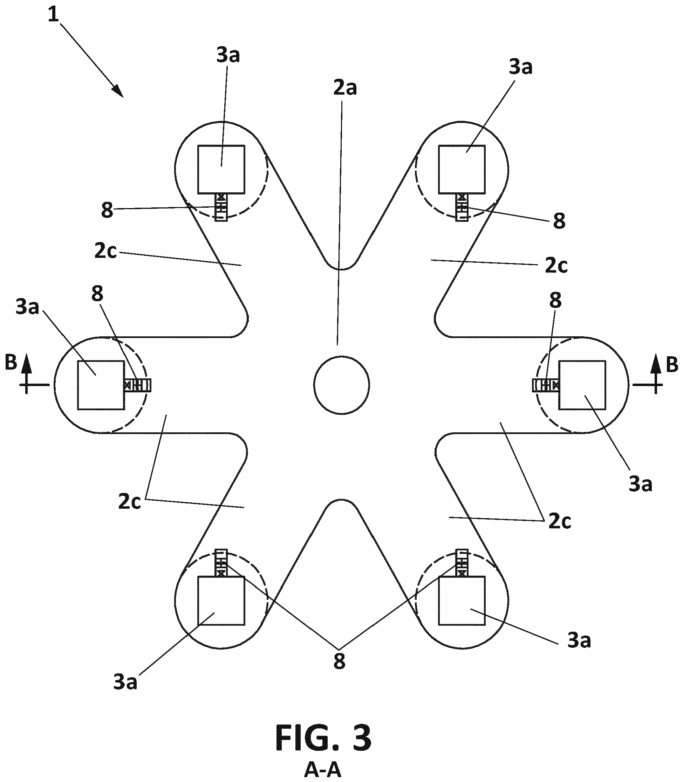

**Figures 1** to **3** illustrate a preferred embodiment of the invention, in this case embodied as a Floating Offshore Wind Turbine Six-Floater structure (1).

The floating structure (1) comprises a platform (2) which is generally a flat body having a central area (2a) and six arms (2c) equidistantly arranged and radially extending and from the central area (2a).

Furthermore, the floating structure (1) has six floaters (3) joined to the platform (2) or built in with the platform (2). Each floater (3) has a cylindrical tubular configuration, that defines a chamber (4) with a closed upper end (3a) and an open bottom end (3b). In this embodiment all floaters (3) operate independently from each other, and are placed at the free ends of the arms (2c).

The floating structure (1) has a wind turbine (10) conventionally formed by a tower (11) attached at one end to the platform (2), a nacelle (12) supported at the other end of the tower (11), and blades (13). As it can be apreciated for example in **Figure 1****,** the longitudinal axis of the floaters (3) are parallel to the longitudinal axis of the tower (11).

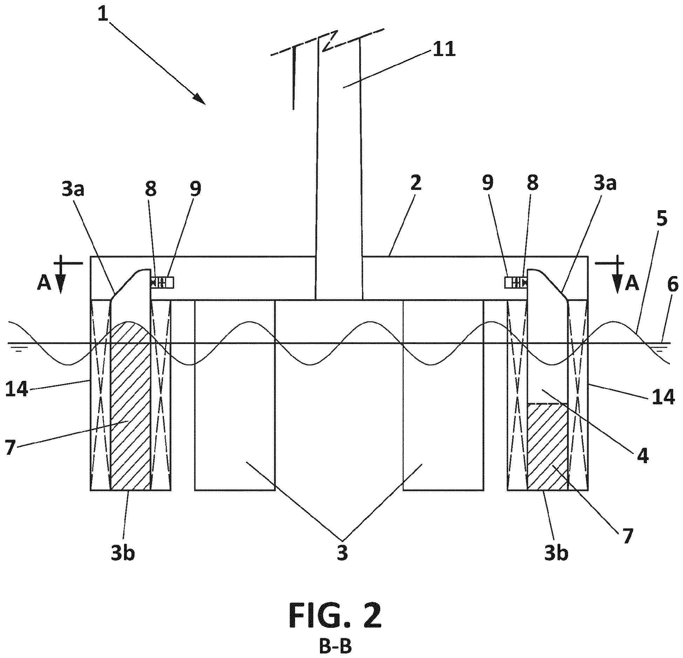

As shown for example in **Figure 2** the structure (1) is configured to operate semi-submerged so that when the structure (1) is floating on the sea, a major part of the floaters (3) is below still water level (6) and the open bottom end (3b) is submerged. In this way, a Oscillating Water Column (7) can oscillate inside each chamber (4) of each floater (3) with the motion (5) of the water.

In the embodiment represented in the figures, the platform (2) is placed on top of the closed upper end (3a) of the floaters (3).

Furthermore, the floating structure (1) incorporates a control valve (8) in each floater (3), which is installed at the upper part of each chamber (4). Each control valve (8) in its open position, communicates the chamber (4) of the respective floater (3) with the ambient air, and in its closed position it serves for controlling the volume of air enclosed within the chamber of each floater (3), thus, also controlling the height of the Oscillating Water Column (7) inside each chamber (4).

The height of the Oscillating Water Column (7) and thus, the opposing moment (obtained with the inertia of the hydrodynamic added mass associated) to the motion moment of the platform (2) that is to be reduced, is adjusted by the air enclosed in the chamber (4), which volume is controlled by the control valve (8) at the upper part of the chamber (4).

In operation, the control valve (8) is open and the Oscillating Water Column height varies following the sea water motion (5). When the control valve (8) is closed, the air enclosed in the chambers (4) prevents the Oscillating Water Column (7) to follow the action of incident waves pressure corresponding to the actual water motion (5) plus the action of the wind turbine (10) plus floating platform (2) motions, keeping a stationary water column height in relation to the still water level (6).

Additionally, the floating structure (1) is provided with an electric turbine (9), for example an unidirectional turbine, coupled to the control valve (8) for generating electric energy from air flow through the respective control valve (8), so that, the turbine (9) serves as a wave energy converter, that takes advantage of the Oscillating Water Column chamber installation.

In this preferred embodiment, the platform (2) or parts of it, are hollow, and the upper part of each floater (3), the control valves (8) and the electric turbine (9), are enclosed within the hollow parts of the platform (2), so that maintenance of these components is more convenient as they can be accessed easily, and additionally they are protected from marine harsh environment. The platform (2) has the required ventilation for the valves to be communicated with the ambient air.

Preferably, ballast tanks (14) are provided in the floaters body to obtain the necessary draft for the required Oscillating Water Column height, both for motion dampening and stabilization control to improve wind turbine (1) efficiency and stability condition for the whole set of wind turbine (10) and platform (2).

Potential applications of the invention in industry, as a tool for motions dampening in floating bodies, are:
In Floating Offshore Wind Turbine Platforms:
- Stabilization control of floating offshore wind turbine platforms, being their use most suitable in Multi-Floaters type, increasing both wind turbine efficiency and operation range (the sea states in which the wind turbine can operate are spread). It is necessary to state that Offshore Wind tendency is toward deep waters, were most of platform are semi-submergible Multi-Floater type, in which Oscillanting Water Column Chamber can be implemented from design stage or as an upgrading in a later stage
- Proven energy extraction of waves, using Wave Energy Converters (i.e. including a turbine with an unidirectional rotation such as a Wells turbine)
- The use of Oscillating Water Colums as Wave Energy Converters produce a hybrid platform that may harvest energy from wind and wave resource, making the whole set more efficient and improving the return of investment

In Floating Offshore Structures or those vessels that spend a great part of their lifespan moored or maintaining their position and heading (station-keeping), being next list not conclusive:
- Offshore Supply Vessels, for Oil and Gas Rigs, with cargo and support purposes. This kind of vessels spend most of their time keeping station close to the rig or in a standby operation patrolling around the rig. Oscillating Water Columns can be used both for station keeping and wave energy harvesting
- Floating Production Storage and Offloading vessels / units, which spend the entire lifetime moored, Oscillating Water Columns to be used for motion reduction and wave energy harvesting.
- Floating Offshore Oil and Gas Rigs, Oscillating Water Columns to be used for motion reduction and energy harvesting.
- Floating Offshore Substations, Oscillating Water Columns to be used for motion reduction and energy harvesting.
- Diving Support Vessels, being the use of Oscillating Water columns the same as in previous case
- Service Operation Vessels, which assist for wind turbines installation, service and maintenance works, as well as living quarters / hotel purposes for workers. The use of Oscillating Water Columns is of special interest in these vessels, for reducing motions during gangway operation, and decreasing offshore crane tip accelerations.
- Air craft carriers.

## Claims

1. A floating offshore structure incorporating a water motion stabilisation system,
the structure comprising:
a platform,
at least one floater joined to the platform,
wherein each floater is a hollow body defining a chamber, and having a closed upper end and an open bottom end, and wherein the floaters are positioned such that the open bottom end is submerged when the offshore structure is deployed on the sea, so that a water column can oscillate inside the chamber of each floater,
a valve for each floater, each valve arranged such that in its open position it communicates an upper part of the chamber of the respective floater with the ambient air, and in its closed position it serves for controlling the volume and pressure of air enclosed within the chamber, a set of sensors to provide information about the platform motion, and
a control system for opening and closing each valve based on the information provided by set of sensors, to stabilise the structure.

2. A floating offshore structure according to claim 1, wherein the set of sensors provide feedback to a control loop of the control system, may consist of at least one of the following sensors or any combination of the following: a sensor of the platform motions period, a sensor of the wave period, a sensor of the wave height, an inclinometer or a wind sensor.

3. A floating offshore structure according to claim 1 or 2, wherein each floater has a cylindrical tubular configuration.

4. A floating offshore structure according to claim 1 or 2, wherein the platform has generally a flat configuration and wherein the floaters are placed below the platform.

5. A floating offshore structure according to any of the preceding claims, wherein the platform has a central area and a plurality of arms radially extending from the central area, and wherein the floaters are located at the free end of each arm.

6. A floating offshore structure according to claim 4, wherein the platform has six equidistantly arranged arms and six floaters.

7. A floating offshore structure according to any of the preceding claims, further comprising a source of pressurized air and/or a vacuum source fluidly communicated with the chamber of each floater, and adapted for controlling the volume of air within each chamber.

8. A floating offshore structure according to claim 7, wherein at least two chambers of different floaters are fluidly communicated for air, vacuum or water transfer between them.

9. A floating offshore structure according to claim 7 or 8, including a control system adapted to use a pressure source, a vacuum source, or water transfer, fluidly communicated with the chamber or between any of the chambers to stabilize the system.

10. A floating offshore structure according to any of the preceding claims, further comprising at least one electric turbine coupled to the valve for generating electric energy from air flow through the valve.

11. A floating offshore structure according to any of the preceding claims, further comprising a hatch installed at the open bottom end of each floater, for closing the same when required.

12. An offshore wind turbine plant comprising the floating structure defined in any of the preceding claims, and at least a wind turbine having a tower attached at one end to the platform, and wherein the longitudinal axis of the floaters are parallel to the longitudinal axis of the tower.

13. A ship comprising the floating structure defined in any of the claims 1 to 11.
